# EUROPEAN PATENT APPLICATION

(11) **EP 2 615 512 A1**
(43) Date of publication of application: **17.07.2013**
(21) Application number: 12196455.5
(22) Date of filing: 11.12.2012
(51) Int. Cl.: G05B 19/042

(54) **Apparatus for the centralized management of machines for the production of food products**

(30) Priority: 16.01.2012 IT MI20120035
(71) Applicant: G.S.G. S.r.l., 36100 Vicenza (IT)
(72) Inventor: Bravo, Genesio, 36050 SOVIZZO-VICENZA (IT)
(74) Representative: Martegani, Franco

(57) **Abstract**

An apparatus (A) for the centralized management of one or more operating machines (M) for the production of food products comprises a display and control device (D) suitable for containing recipes and production cycles of processed and semi-processed products, to which said recipes refer, and commanding and controlling, in a centralized manner, the operativeness of said operating machines (M); and connection and communication means (WL,S) for connecting said display and control device (D) to the control unit (CEi) of each machine (Mi) of said operating machines (M).

## Description

The present invention relates to an apparatus for the centralized management of operating machines for the production of food products.

The present invention is advantageously used for the centralized control and management of the functional operativeness of a plurality of operating machines which define a plant for the processing and production of food products, in particular in the field of confectionery, ice-cream, bakery, catering and gastronomy in general, to which the following description will refer specifically, at the same time, however, maintaining its generality.

Different types of operating machines are widely known in food production, such as for example: dosing-weighing machines (for the weighed dosage of the ingredients of recipes based on the products to be produced), food-mixers, dough sheeters, chopping and creaming machines.

Production plants are generally defined by a plurality of these different types of machines for effecting the numerous operations to be carried out, often consequentially.

The correct functionality of each operating machine is currently controlled by units with electronic control cards with which each individual machine is normally equipped, whereas the management and functionality, i.e. the effective degree of operativeness of the whole production plant of which the operating machines form part, cannot be centrally controlled.

It should also be noted that the above control cards have a considerable impact on the cost of the single operating machines and must also store extremely large quantities of data; furthermore, the use of a large number of advanced machines requires the same quantity of electronic cards and consequently the cost increases in relation to the number of machines.

An objective of the present invention is therefore to overcome the considerable problems of the known art described above.

In particular, an objective of the present invention is to provide an apparatus for managing the functionality of all the operating machines forming part of a production plant for the processing and production of food products, which is capable of centering within itself all the productive know-how (consisting of recipes and implementation procedures) and which is independent of the productive plant itself, therefore capable of adapting itself in relation to the type and quantity of machines present in the laboratory. The know-how is therefore linked to the apparatus that contains it, in the form of recipes and processing procedures, and no longer to the single machines and operator controlling them.

A further objective of the present invention is to provide an apparatus for managing the correct functionality of the production plant, the apparatus also having multimedia capacities, at the same time allowing a significant reduction in the costs of the same production plant, simplifying the structure of the machines of which it is composed.

The structural and functional characteristics of the present invention and its advantages with respect to the known art will appear more evident from the claims provided hereunder, and in particular from the following description, referring to the enclosed drawings, which show schematizations of some preferred but non-limiting embodiments of a management apparatus object of the invention, in which:
- figure 1 represents a schematic view of a first embodiment of the apparatus for the centralized management of a machine for the processing and production of food products;
- figure 2 represents a schematic view of a second embodiment of the apparatus for the centralized management of a machine for the processing and production of food products;
- figure 3 represents a schematic view of a third embodiment of the apparatus for the centralized management of a machine for the processing and production of food products;
- figure 4 represents a schematic view of a further embodiment of the apparatus for the centralized management of a plurality of machines for the processing and production of food products (each of which using an embodiment illustrated in figures 1 to 3), said embodiment being applicable to a laboratory or kitchen;
- figure 5 is a block scheme illustrating the phases of the control method effected by the apparatus of figures 1 to 4; and
- figure 6 is a block scheme illustrating the phases of the management method effected in an operating machine forming part of the plant and connected to the apparatus of figures 1 to 4.

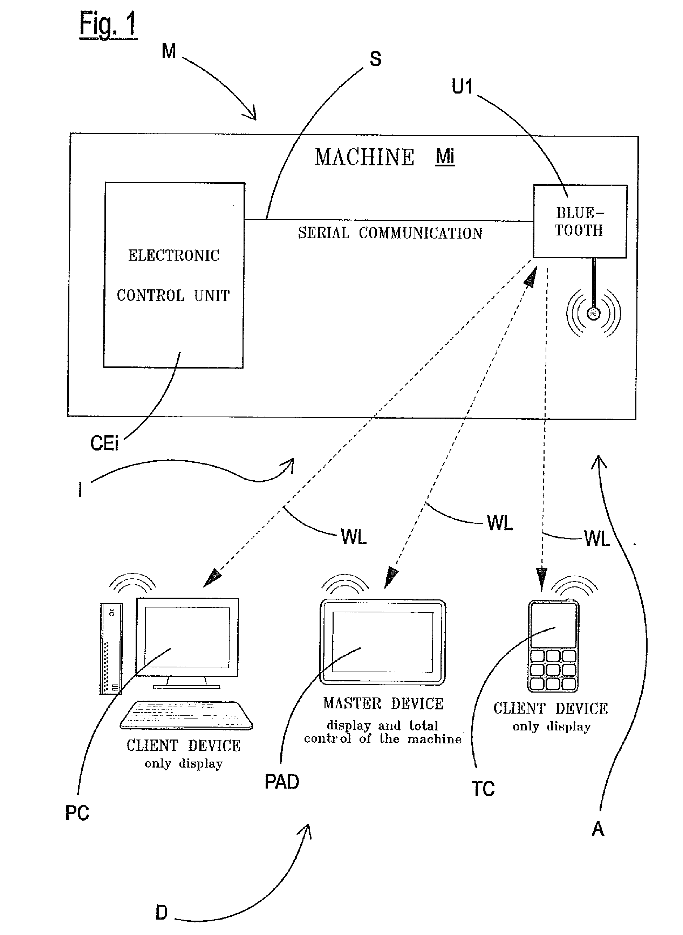

With reference to figures 1 to 4, A indicates as a whole an apparatus for the centralized management of the operativeness of a plant I for the processing and production of food products (not illustrated), which is defined by a plurality of operating machines M in the food industry (for the sake of simplicity, a single generic machine Mi, with i=1, 2...n, is illustrated in figures 1 to 4), such as for example, a dosing-weighing machine, a food-mixer, a stirrer, a chopping machine, a creaming machine etc.

According to a first but non-limiting embodiment illustrated in figure 1, the management apparatus A comprises a display and control device D (called "Client"), which is defined by a Personal Computer PC (desktop or laptop), or alternatively a cell phone TC, which is unidirectionally connected by means of a connection of the wireless type WL to an external WiFi/Bluetooth receiving unit Ui, in turn connected through a serial connection S, for example: RS232, RS485, Canbus, UART, I²C, SPI or equivalent systems, to a control unit CEi of the generic operating machine Mi.

The communication, which is in the form of data packets, is effected by means of a protocol (PRT), not shown in the figure, conceived ad hoc, characterized by a well-defined, univocal and prefixed syntax. The protocol, common to all the machines Mi and devices D, allows a safe (with verification of the identity of the authorized interlocutors) and correct (through control of the integrity of the packet) communication. By using the above protocol, the data transmitted pass from the device D to the machine Mi and viceversa, through the transmission "channel" linked to the type of wireless connectivity (for example using WiFi connectivity through protocol: TCP/IP, UDP, etc.).

In this way, all the information and data contained in the control unit CEi and relating to the operativeness of the machine Mi are visualized by the control operator directly on the device D.

Alternatively, the device D is advantageously defined by: a smartphone, or netPC, or PC tablet or similar item, indicated with PAD (called "master"), for example an iPad of Apple^{®}, which is connected through a bidirectional wireless connection to the external WiFi/Bluetooth receiving unit Ui, so that the operator is able not only to visualize the information and data coming from the machine Mi, but above all to intervene directly on the operativeness and correct total functioning of the machine Mi itself.

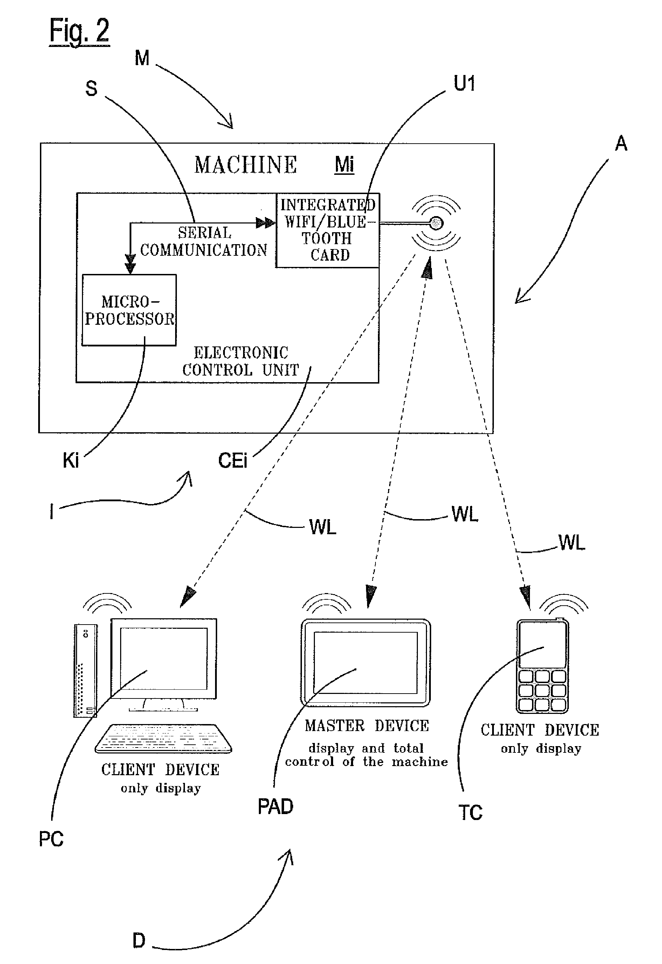

According to the second preferred embodiment illustrated in figure 2, the control unit CEi of the generic operating machine Mi contains in its interior a WiFi/Bluetooth card Ui serially connected to the microprocessor Ki.

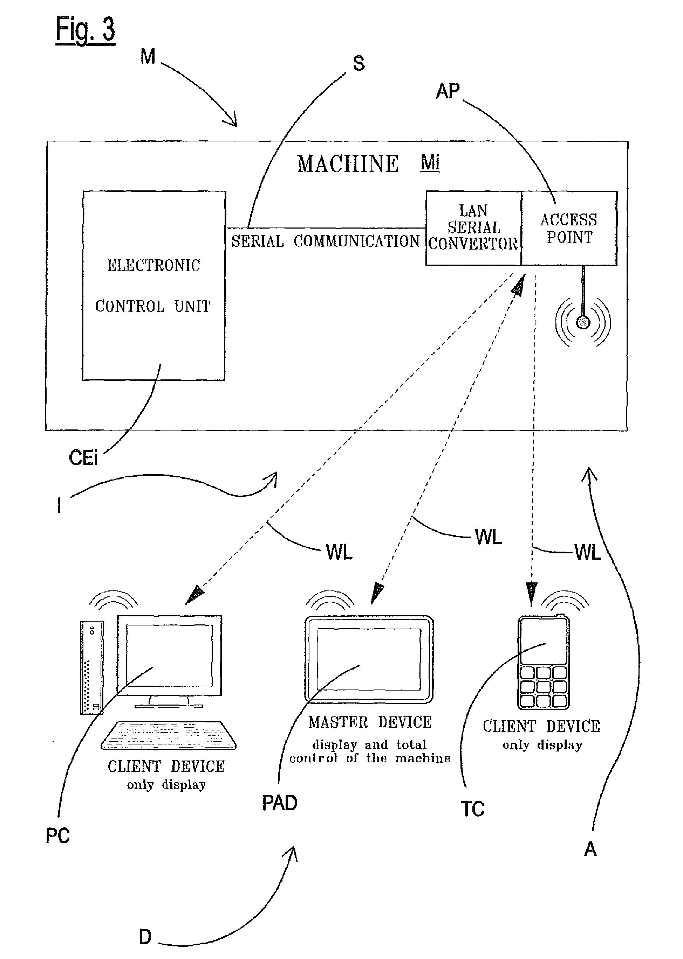

According to the third preferred embodiment illustrated in figure 3, the control unit CEi of the generic operating machine Mi is serially connected to a serial/LAN converter which in turn is associated with an access point AP preferably positioned inside or outside the operating machine Mi.

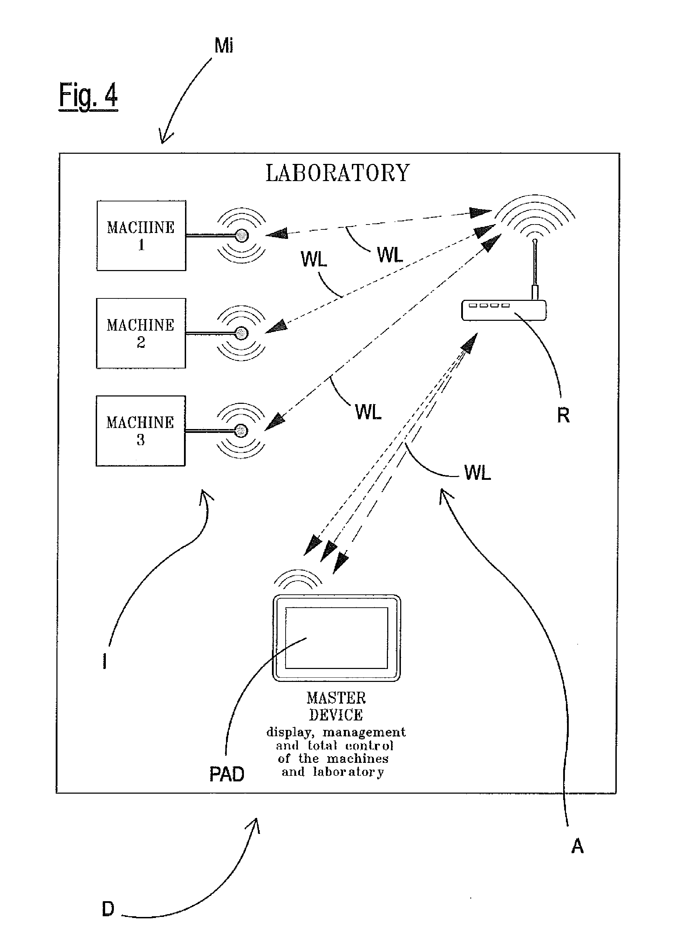

According to the embodiment illustrated in figure 4, preferably for small-sized plants, used for example in laboratories or kitchens, the apparatus A comprises a wireless access point (in the figure WiFi router) indicated by R, which is connected with the machines M1, M2 and M3 and the master device D via a two-dimensional wireless connection WL, so that the operator is able not only to visualize the information and data coming from the machines M1, M2 and M3, but above all to intervene directly and centrally on the operativeness and overall correct functioning of the plant I composed of the machines M1, M2 and M3.

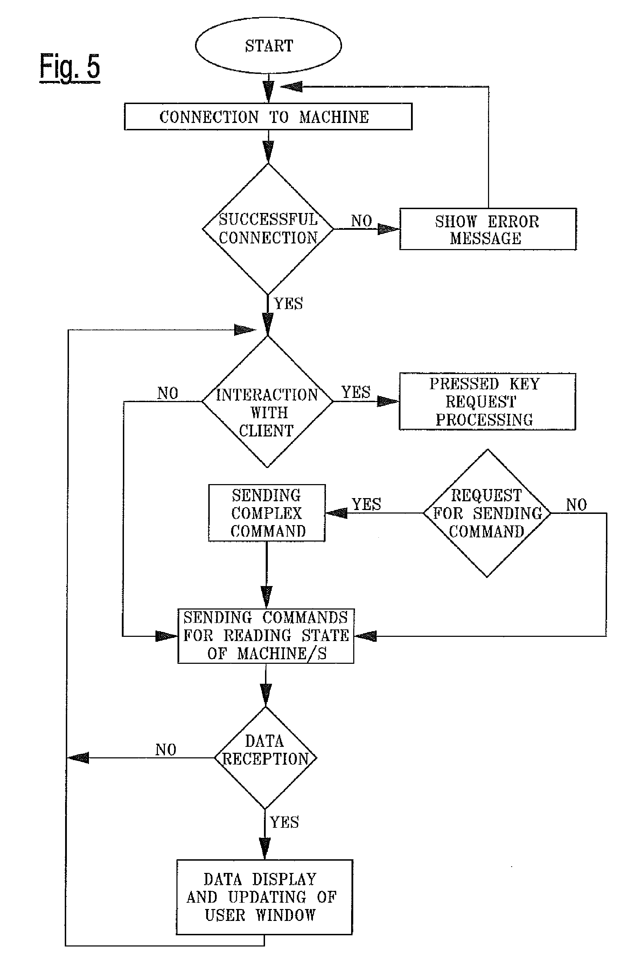

According to the block diagram of figure 5, the control method effected by the apparatus A comprises the following operative phases:
- Connection to the machine Mi:
   The phase, carried out by the device D, consists in an inquiry to find out whether there is at least one machine Mi available for connection in the plant I. This phase is also extended to other/all machines Mi of the plant I. Once an available connection has been found, the device D carries out a connection-control test, if the connection is not effected by means of a compatible machine, the management software displays an error message;

- Interaction with the user-operator:
   This phase relates to accepting the request for interaction with the user. Three results can be obtained from this procedure:
      1. Pressing a key and sending a command to the machine → the following sequence of procedures is effected: PROCESSING REQUEST WITH KEY PRESSED
         - REQUEST FOR SENDING COMMAND -- SENDING COMPLEX COMMAND - SENDING COMMAND FOR READING STATE OF MACHINE.
      2. Pressing the key without sending a command → the following sequence of procedures is effected: PROCESSING REQUEST WITH KEY PRESSED - REQUEST FOR SENDING COMMAND - SENDING COMMAND FOR READING STATE OF MACHINE.
      3. No pressing of the key → the following sequence of procedures is effected: SENDING COMMAND FOR READING STATE OF MACHINE;
- Sending a command for reading the state of the machine Mi:
   A request is sent for obtaining machine data Mi. This phase is always effected in order to update the state of the machine Mi on the display of the device D;
- Reception of information and data
   When there is reception of useful data, the screen updating operation is immediately effected through the subsequent display phase, otherwise, if the data are lost for some reason, the updating is not effected and the function that manages the interaction between the user and operator, is called.

The whole procedure described above is advantageously carried out by the device D in multithreading mode, in this way, the request for reading the state of the machine Mi can be continuously effected (for example once every 500 milliseconds), completely skipping the whole interaction part with the user and managing the latter only when the user itself triggers the event (by pressing a key, etc..). This therefore eases the control system, as the whole part of the machine code, reserved for interactions with the keyboard or display, is not exerted (with each machine cycle).

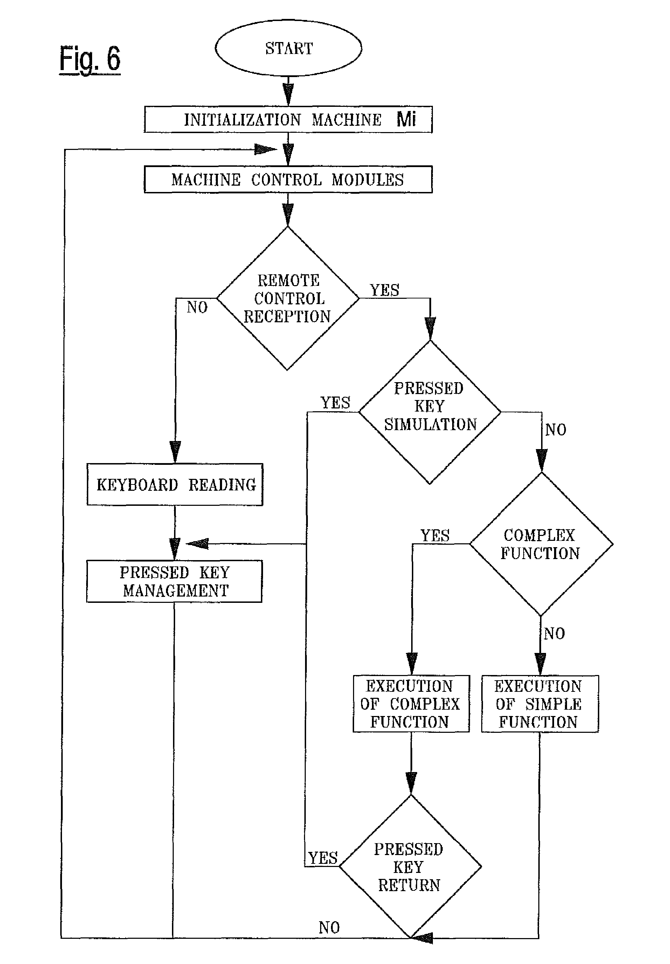

According to the block scheme of figure 6, all the machines Mi of the plant I can be piloted in three different ways:
1. Monitoring only: upon sending request commands of the device D, the machine Mi only sends data revealed in the machine Mi itself by the various sensors onboard, functioning data, possible anomalies, etc..
2. Control of the machine Mi by the device D used as remote control: by sending specific commands, the device D is interfaced with the machine Mi, activating possible programs already inserted onboard, thus simulating a remote-control keyboard.
3. Control of the machine Mi by the apparatus through sending activation instructions: by sending specific commands, it is possible not to use any of the programs already present onboard the machine, and run external programs residing only on the device D, and which are therefore never physically loaded into the memory of the machine Mi.

The operative method comprises the following phases:
- Initialization: routine controls are effected at the start-up of the machine Mi.
- Control modules of the machine Mi: the basic operations are effected, a list of these operations (strictly depending on the function each single machine must exert) may be: heating, cooling, preservation, stirring, emulsion, weighing, effecting a whole working cycle. These modules therefore include all the functions that dialogue with the hardware of the machine Mi and which are therefore capable of piloting the actuations for the functioning of the machine itself;
- Remote control reception: the presence of a command coming from the external device D is identified. The command must be in conformance with the structure required by the above-mentioned protocol (PRT) in order to be understood by the software inserted in the electronic control unit CEi onboard the machine Mi.
- Pressed key simulation: once the command has been recognized as such, the same is executed. It is initially evaluated whether the command is simply the simulation of the pressing of a key. If so, this is directly followed by the management of the key pressed, through the block that acts on interactions of the user. In this case, the second piloting mode is adopted.
- Complex function: if the command sent does not simulate the pressing of a key, a routine is effected, that is capable of understanding the meaning of said command, i.e. whether it represents a complex function or a simple function. This occurs thanks to the formatting of the command, which, in the case of a complex function, in addition to the presence of the command itself, may also have parameters (temperature, time, pressure, speed, etc..).
- Execution of a complex function: this phase configures the software parameters responsible for carrying out a certain instruction once the software returns to "machine control modules". In simpler terms: the command is put in an execution queue of the FIFO type (*First In First Out*) that is processed in the "machine control modules" block, in this way the conditions are set for effecting a certain operation, which must last for a certain set, established by means of a parameter integrated in the command itself. The command "WARM|85" will establish a call for the function that enables heating up to 85°C, this function however only being executed in the above block. In this case, the third piloting mode is adopted. A succession of calls for this routine, by inserting different commands with different parameters, allows the dynamic composition of any recipe.
- Execution of a simple function: This phase can exert two functions. The first function is to configure the software parameters responsible for selecting and executing a certain program already residing in the memory of the machine Mi. In simpler terms: it selects the n-th program and imposes an execution parameter. For example, the command "PROG|1|85" will set-up program 1 with a final temperature of 85°C. This case relates to the second piloting mode. The second function is to reply to the monitoring request (by the device) of the sensors present in the machine, possible alarms, etc.. Also in this case, a command will be inserted which the machine will execute by sending to the device D, all or only some of the values of interest.
- Pressed key return: The block "execution complex function" can return a pressed key simulation, this will allow the machine Mi to effect an automatic start immediately after the command has been sent.
- Keyboard reading: the block effects a physical reading of the keyboard of the machine Mi, and therefore the interaction of the user on the machine itself without passing through the device D.
- Pressed key management: for every pressing of a key, whether it be real (therefore a physical action on the keyboard of the machine) or simulated (command coming from the device D), this function configures the software parameters responsible for starting or stopping a certain recipe (or program), inside or outside the memory of the machine, once the software returns to "machine control modules".

Consequently, in short, in order to control the machines M of the plant I, the software assembled on device D effects an initial interrogation of the machines M available, in order to be able to connect to the same.

Once the connection has been effected, the device D starts a continuous monitoring, cyclically sending a request for information to each machine.

In technical jargon, this system is called "polling" and allows the device D to understand, with a fixed time interval, decided a priori, or preferably variable (according to the operations being effected), the functioning state of a single machine Mi. If the user-operator interacts with the device D, by sending a command to a certain machine, the polling is interrupted to send the command and is then resumed.

The polling time, for example, could be set at 1 second per single machine and then reduced to 2 tenths of a second if the single machine is effecting a more delicate operation.

The machines M therefore exert a passive role and do not send information if they are not interrogated. This is to avoid useless traffic on the transmission channel. In this way, the machine Mi, when requested by the device D, will send values: of the probes (temperature, pressure, voltage, current etc.) onboard, the exact operation that is being carried out at that moment, possible alarms or interaction with a user with the machine itself; such as for example: opening of screens, change in the state of internal valves, or problems relating to actuations (such as thermal protection of motors, resistances, malfunctioning of mechanical components, possible monitorable breakdowns of instrumentation onboard the machine).

According to a variant, not illustrated, various devices D can be connected contemporaneously to a machine Mi, in which one or more devices exert a "master device" function, therefore having the capacity of actively driving the machine M itself by sending commands for the various actuations or for carrying out various recipes, whereas other devices exert a "slave device" function, therefore only having the capacity of seeing what is happening on the various machines Mi.

The device D is consequently suitable for directing the work of the machines M of the plant I, by actuating the start of the production cycles and single implementation steps of the various recipes, set on its memory.

In this way, the production of operating machines with extremely powerful and costly electronic control units, requiring considerably capacious custom memories, is advantageously avoided.

With the apparatus A in question, in fact, the structure of the software housed on the machines M can be much simpler, only including the basic functions and associated with electromechanical or electric actuators for obtaining the effective: heating, cooling, preservation of the product and alarm control. Every datum collected by the machine (temperatures, pressures, alarms, etc.) is in any case communicated to the device D, object of the invention, for managing the progress of the possible process (recipe) in function, or exception (in the case of some unexpected alarm).

Paradoxically, by using the apparatus A, all the keyboards and communication components with the user can therefore be eliminated from the machines M, as all the machines are governed and controlled, automatically or manually, by the device D and by the user who remains in the proximity of the device D itself.

In this way, it can be immediately understood which machines have problems linked to malfunctioning and a message can be immediately communicated to the user/operator. As is the case for a real service network, the device D is capable of effecting a "verification" on the network, and through the responses obtained from the machines "present" and functioning, it will be able to begin to set up the operations following the planning pre-established by the user.

If a sequence of processed or semi-processed products to be produced is set up, it will be up to the device D to manage which machine Mi should be activated first and the sequence of operations to be effected, communicating how to proceed to the other users, always depending however on the availability of the resources.

The device D may even advise the user during the planning activity as to which formulations can be prepared in relation to the availability of the machines M (due to possible breakages), communicating to the user the effective possibility of producing the processed product in question.

If pastry cream is to be inserted in the planning list of the device D, for example, but knowing that the "cream cooker" operating machine Mi is out of order, the device D is capable of automatically transferring the production of this semi-processed product (evidently depending on the priority assigned to this recipe) onto a multifunction machine, obviously recalculating, on the basis of this transfer, all the slowdown times of the normal production (for example of ice-cream) that said machine should have effected instead of cream.

In practice, in this way it is possible to know the daily production times and quantities of semi-processed products specifically produced by the laboratory in a single workday, also calculating the exact costs and losses due to a possible stoppage of the machine.

## Claims

1. Apparatus (A) for a centralized management of one or more operating machines (M) for the production of food products, **characterized in that** it comprises a displaying and checking device (D) adapted to contain recipes and production cycles of products and semi-processed products, to which the recipes refer to, and to command and control, in a centralized manner, the operation of said operating machines (M); and connection means (WL,S) for connecting said displaying device (D) to the control unit (CEi) of each machine (Mi) of said operating machines (M).

2. Apparatus according to claim 1, **characterized in that** said connection means (WL,S) comprise at least a wireless (WL) connection.

3. Apparatus according to claim 1, **characterized in that** said connection means (WL,S) comprise at least a serial connection (S).

4. Apparatus according to any claim 1 to 3, **characterized in that** said device (D) comprises a personal computer (PC), said computer (PC) being connected to a receiving unit (Ui) through a wireless connection (WL); said receiving unit (Ui) being connected to said control unit (CEi) of said operating machine (Mi) through a serial connection (s).

5. Apparatus according to claim 4, **characterized in that** said personal computer (PC) comprises a tablet PC (PAD) in bidirectional connection wireless with said receiving unit (Ui).

6. Apparatus according to claim 5, **characterized in that** said receiving (Ui) unit is connected to said tablet PC (PAD) through a wireless access point (R).

7. Apparatus according to any claim 1 to 3, **characterized in that** said d device (D) comprises a cellular phone/smartphone (TC), said phone/smartphone (TC) being connected to a receiving unit (Ui) through a wireless connection (WL); said receiving unit (Ui) being connected to a control unit (CEi) of said operating machine (Mi) through a serial connection (S).

8. Apparatus according to any claim 1 to 7, **characterized in that** said receiving unit (Ui) is part of said control unit (CEi) of said operating machine (Mi) and connected to its microprocessor (Ki).

9. Apparatus according to any claim 1 to 8, **characterized in that** said receiving unit (Ui) comprises a serial converter/LAN (LAN) connected to an access point (AP).

10. Processing and production plant (I) for production of food products, comprising one or more operating machines (M) and an apparatus (A) for controlling said machines (M) according to one or more previous claims 1 to 9.
